# EUROPÄISCHE PATENTSCHRIFT

(11) **EP 1 944 570 B1**
(45) Veröffentlichungstag und Bekanntmachung des Hinweises auf die Patenterteilung: **08.03.2017**
(21) Anmeldenummer: 08000140.7
(22) Anmeldetag: 05.01.2008
(51) Int. Cl.: G01B 11/24, G01B 11/16, B21B 38/00, G01B 13/16

(54) **Verfahren zur Messung der Geradheit von Langprodukten**
Method for measuring the straightness of elongated products
Procédé destiné à la mesure de la linéarité de produits allongés

(30) Priorität: 15.01.2007 DE 102007002982; 06.12.2007 DE 102007059185
(43) Veröffentlichungstag der Anmeldung: 16.07.2008
(73) Patentinhaber: SMS group GmbH, 40237 Düsseldorf (DE)
(72) Erfinder: Daube, Thomas, 47279 Duisburg (DE); Nerzak, Thomas, 45894 Gelsenkirchen (DE)
(74) Vertreter: Grosse, Wolf-Dietrich Rüdiger

(56) Entgegenhaltungen:
- EP-A- 1 199 543
- WO-A-99/02962
- DE-A1- 19 725 726
- JP-K4- S59 134 008
- US-A- 4 589 082

## Beschreibung

Die Erfindung betrifft ein Verfahren zur Messung der Geradheit von gewalzten, stabförmigen Langprodukten mit den im Oberbegriff des unabhängigen Anspruchs 1 angegebenen Merkmalen.

Zur Planheitsmessung von Bändern, insbesondere Metallbändern, sind durch die DE-A-197 25 726 A und EP-A-1 199 543 im Produktionsfluss angeordnete Messeinrichtungen bekannt geworden, bei denen das durchlaufende Metallband zwischen zwei voneinander beabstandeten Rollenpaaren eingespannt wird. Die Rollenpaare ermöglichen es, im Metallband einen definierten Zug aufzubringen. Zwischen den Rollenpaaren ist im Bereich der Einspannlänge eine Kraftübertragungseinrichtung bzw. eine Messrolle vorgesehen, die von unten mittels eines Zylinders beaufschlagt in das Metallband eintaucht und dieses nach oben auslenkt. Durch Messung der Reaktionskräfte auf die Messrolle oder der durch die Kraftübertragungseinrichtung bewirkten Längenunterschiede einzelner Bandlängsfasern werden Rückschlüsse auf die Bandkrümmung bzw. Planheit des Metallbandes gezogen.

Aus der WO-A-99/02962 ist es bekannt, ein endliches Richtgut, z. B. Blech, Band, Profil oder Rohr, insbesondere Draht, endseitig in schwenkbeweglichen Aufnehmern, von denen einer ortsfest und der andere linear verschieblich ist, fest einzuspannen. Durch entsprechende Drehbeaufschlagung der Aufnehmer wird das eingespannte Richtgut wechselnd konkav oder konvex verformt und aus Messwerten der E-Module, die Streckgrenze oder dergleichen bestimmt.

Durch die JP 57158507 A wird offenbart, die Länge, die ein ungestützt auf Auflagerpunkten aufliegendes, gebogenes Stahlprodukt besitzt, durch Vergleich mit durch eine Druckstange unterschiedlich aufgebrachten Ausbiegungen zu ermitteln.

Aus der JP 59134008 U ist es bekannt, zwischen zwei aufeinanderfolgenden Walzgerüsten einer Walzstraße zum Herstellen von metallischen Bändern, wobei das Walzband zwischen den beiden Walzgerüsten bzw. deren Horizontalwalzenpaaren eine freie, ungestützte Länge einnimmt, eine automatische Regelung der Walzbandschlinge vorzusehen. Dabei wird die Höhe bzw. Durchbiegung der Walzbandschlinge überwacht und kann bei Abweichungen durch Beeinflussung der Horizontalkraft im gewalzten Bandmaterial wieder in den zulässigen Toleranzbereich gebracht werden.

Für ebenfalls einen anderen Gegenstand, nämlich einen Nuklearstab, ist es durch die US 4.598.082 bekannt geworden, den Stab auf mehreren im gleichen Abstand voneinander angeordneten, angetriebenen, umlaufend konkav eingeschnürten Rollen abzulegen und ein Stabende zur Stabrotation in ein von einem Motor angetriebenes Einspannmittel einzuspannen. Die freie Länge des Nuklearstabes zwischen den Rollen ist ungestützt, wobei Abweichungen von der Geradheit durch bodenseitig in den Zwischenräumen benachbarter Rollen vorgesehene Messmittel bei aufgrund von Unrundheiten bzw. Aufwölbungen vorliegenden Höhen- bzw. Abstandsabweichungen festgestellt werden.

Bei einer bekannten Methode wird die Geradheit eines Profils bestimmt, indem z. B. ein Träger auf den Flansch gestellt und mit einem angelegten Draht die Sehne gemessen wird. Eine solche manuelle Messung erfordert einen hohen Zeitaufwand und führt damit zu Produktionseinbussen.

Zur automatischen Messung und Bestimmung der Geradheit von Schienen und Profilen am durchlaufenden Produkt ist es in der Praxis bekannt, Lasermeßgeräte bzw. -verfahren einzusetzen. Dazu wird die Schiene mit ca. 1 m/s über einen Rollgang bewegt und der Abstand zwischen Laserkopf und Schiene gemessen, wodurch sich die Welligkeit (Geradheit auf kleinen Längenskalen, z. B. 1 m) bestimmen läßt. Das Meßprinzip beruht auf einer Positionsmessung gleichzeitig an mehreren Punkten in Bezug auf eine feste Referenz (optisches Lineal). Das Lasermeßverfahren wird allerdings bei höheren Geschwindigkeiten, beispielsweise 10 m/s, problematisch, weil die Eigenbewegung des Profils bzw. Langprodukts, wie Springen auf dem Rollgang oder Schwingungen, als unvermeidliche Störgröße das Messergebnis verfälscht.

Durch die EP 0 935 120 A2 ist ein anderes Meßverfahren bzw. eine andere Meßvorrichtung bekannt geworden. Hierbei wird die Geradheit von Langgut mit mehreren Wägezellen nach Art einer Krümmungswaage ermittelt. Das Langgut wird auf definierte Punkte aufgelegt und die Gewichtskraft bestimmt. Durch die Form des Langguts bzw. - produkts (Krümmung) variiert der Kraftverlauf, so daß hieraus die Geradheit ermittelt werden kann. Die Krümmungswaage kann jedoch nur bedingt im Durchlauf verwendet werden. Außerdem sind die Reibungseinflüsse und der Kontakt mit dem Rollgang unbestimmt.

Der Erfindung liegt daher die Aufgabe zugrunde, ein Verfahren der gattungsgemäßen Art zu schaffen, mit dem sich die Geradheit eines Langprodukts im Durchlauf ohne die genannten Nachteile und ohne Störungen des Fertigungsprozesses ermitteln läßt.

Diese Aufgabe wird mit den im kennzeichnenden Teil des unabhängigen Verfahrensanspruchs 1 angegebenen Merkmalen gelöst. Der Erfindung liegt hierbei die
Überlegung zugrunde, durch die für den Durchlauf unschädliche Einspannung, wie vergleichbar bei einem beidseitig festgelegten Träger, des Langprodukts definierte Verhältnisse bzw. einen definierten Zustand über eine freie, ungestützte Einspannlänge des Langprodukts zu schaffen und dort über eine Abstandsmessung, z. B. mittels Lasermeßgeräten, die Gradheit zu bestimmen. Hierbei wird die Krümmung bzw. Auslenkung des Langprodukts aufgrund seines Eigengewichts und die angelegte Sehne als Referenz in Bezug genommen.

Die Messung kann vorteilhaft in verschiedenen Krümmungsebenen erfolgen. Optional läßt sich auch die Verdrehung des Langproduktes durch eine gezielte elastische Torsion ermitteln. Zur weiteren Optimierung bei der Bestimmung der Sehne kann vorteilhaft das Flächenträgheitsmoment des Langproduktes durch Messung der Produktgeometrie, z. B. die Flanschbreite, einbezogen werden.

Nach einer bevorzugten Ausführung der Erfindung wird das Langprodukt über seine freie, ungestützte Einspannlänge durch eine Kraft beaufschlagt und mit gezielter Auslenkung elastisch verformt. Der Einfluss der Störgrößen, insbesondere von Schwingungen, wird hierdurch deutlich verringert und das Meßergebnis viel genauer im Vergleich zu einer Auslenkung bzw. Durchbiegung aufgrund allein des Eigengewichts, das dann vorteilhaft bei der zur Auslenkung führenden Kraft berücksichtigt und kompensiert wird. Die Auslenkung kann durch ein Lasermeßgerät ermittelt werden.

Somit ist selbst bei hohen Durchlaufgeschwindigkeiten, ohne daß Eigenbewegungen des Langprodukts das Meßergebnis verfälschen können, eine kontinuierliche Kontrolle der Geradheit und Dokumentation, zum Qualitätsmanagement, möglich. Außerdem kann eine direkte Rückkopplung der Messergebnisse auf einen Walz- und insbesondere Richtprozeß in einer Rollenrichtmaschine erfolgen.

Eine vorteilhafte Ausgestaltung der Erfindung sieht vor, daß in dem freien, ungestützten Längenabschnitt ein das Langprodukt zu einer Richtung hin gezielt mit elastischer Umformung auslenkendes Kraftbeaufschlagungsmittel, vorzugsweise ein Hydraulikzylinder, vorgesehen ist. Die Messgenauigkeit wird auf diese Weise durch Überlagerung und Kompensation des auslenkenden Eigengewichts des Langprodukts verbessert.

Nach einer bevorzugten Ausführung der Erfindung weist jeder Einspannbereich mindestens ein Rollenpaar auf, das aus einer oberen und einer unteren Rolle besteht, zwischen denen das Langprodukt hindurchläuft, wobei das Kraftbeaufschlagungsmittel mit einer in das Langprodukt eintauchenden Arbeitsrolle verbunden ist. Die Rollenpaare gewährleisten sowohl den kontinuierlichen, schnellen Durchlauf des Langprodukts als auch dessen sichere Einspannung, wobei die Rollen vorteilhaft gegen das durchlaufende Langprodukt anstellbar sind.

Weitere Merkmale und Einzelheiten der Erfindung ergeben sich aus den Patentansprüchen und der nachfolgenden Beschreibung von in den Zeichnungen schematisch dargestellten Ausführungsbeispielen der Erfindung: Es zeigen:
- Fig. 1: einen prinzipiellen Aufbau einer eine ungestützte Einspannlänge für ein durchlaufendes Langprodukt zwischen zwei voneinander beabstandeten Einspannbereichen bereitsstellenden Messeinrichtung;
- Fig. 2: am Beispiel eines beidseitig festgelegten Trägers die trotz des durchlaufenden Langprodukts erfindungsgemäß vergleichbar erreichte Einspannung;
- Fig. 3: die Messeinrichtung nach Fig. 1 mit zwischen den Einspannbereichen zur zusätzlichen Auslenkung des Langprodukts angeordnetem Kraftbeaufschlagungsmittel; und
- Fig. 4: die im Materialfluss hinter einer Rollenrichtmaschine angeordnete Messeinrichtung.

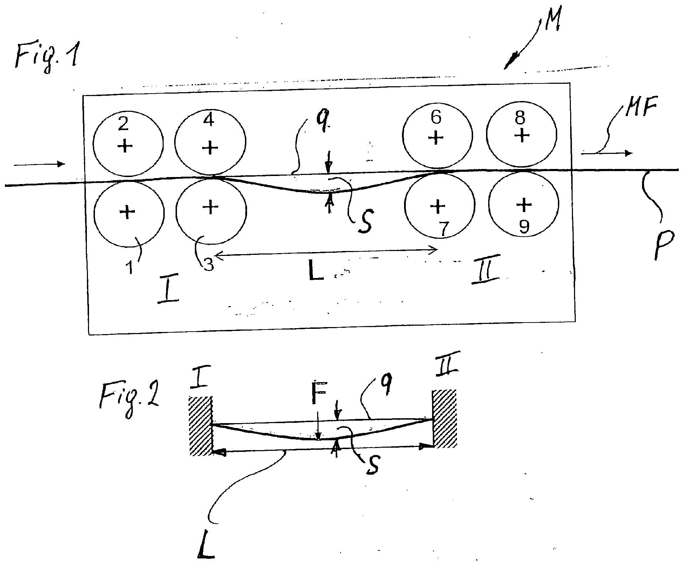

Die Messeinrichtung M nach Fig. 1 besteht aus zwei voneinander beabstandeten Gruppen mit jeweils zwei Rollenpaaren, wobei den unteren Rollen 1, 3, 7 und 9 entsprechend obere Rollen 2, 4, 6 und 8 zugeordnet sind. Die beiden Rollenpaare bilden Einspannbereiche I und II für ein die Messeinrichtung M in Materialflussrichtung MF kontinuierlich durchlaufendes Langprodukt P, z. B. ein gewalztes Trägerprofil oder eine Schiene. Das durchlaufende Langprodukt P nimmt zwischen den Rollenpaaren bzw. Einspannbereichen I, II eine definierte, ungestützte EInspannlänge L ein. In diesem ungestützten Einspannlängenbereich erfährt das Langprodukt aufgrund des Eigengewichts eine Auslenkung S, die durch Beaufschlagung mit einer Kraft F gezielt mit elastischer Verformung ausgeprägt werden kann. Eine mit ideeller Geradheit über die ungestützte Einspannlänge L gelegte Sehne q erlaubt es, mit einem geeigneten Messmittel (nicht dargestellt) die Auslenkung S und die resultierende Kraft zu ermitteln und die Sehne als Funktion von S und F zu bestimmen. Die Messwerte können einem nicht gezeigten, übergeordneten Zentralrechner zugeleitet werden. Die Auslenkung S des Langproduktes P unter der definierten Last kann optional auch mit einem Laser gemessen werden.

Es werden für die jeweilige momentane Messung definierte Verhältnisse wie bei einem gemäß Fig. 2 angedeutet beidseitig festgelegten Träger erreicht, und zwar zwischen den von den Rollenpaaren 1, 2 sowie 3, 4 und 6, 7 sowie 8, 9 gebildeten Einspannbereichen I, II.

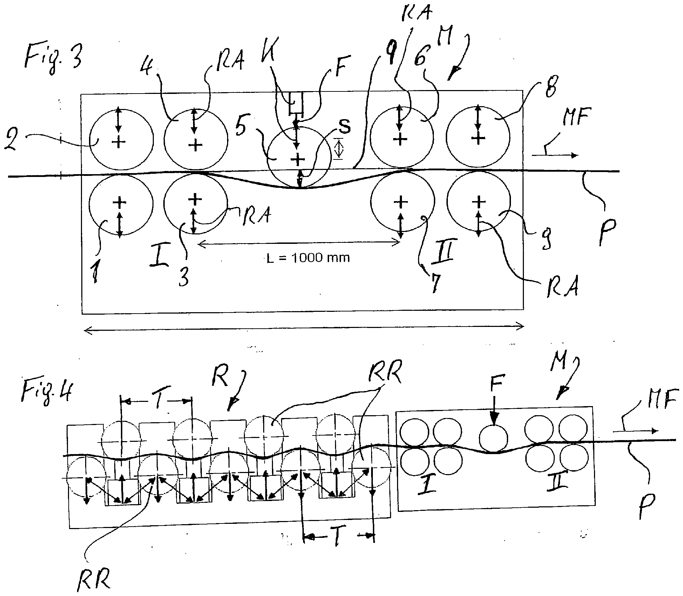

Die Fig. 3 zeigt, daß die einzelnen oder zumindest einzelne Rollen der Rollenpaare der Einspannbereiche I und II durch schematisch angedeutete Rollenanstellmittel RA an das Langprodukt P anstellbar sind. Außerdem befindet sich zur Auslenkung des Langproduktes P mit elastischer Verformung im Bereich der ungestützten Einspannlänge L eine Arbeitsrolle 5, die von einem Kraftbeaufschlagungsmittel K betätigt von oben in das Langprodukt P eintaucht.

In Fig. 4 ist die Kombination einer in einer bestimmten Teilung T angeordnete obere und untere Richtrollen RR aufweisenden Rollenrichtmaschine R mit der dieser im Materialfluss MF im kontinuierlichen Durchlauf nachgeschalteten Meßeinrichtung M dargestellt. Selbst bei hohen Durchlaufgeschwindigkeiten von z. B. 10 m/s ist einerseits eine kontinuierliche Kontrolle der Geradheit sowie Dokumentation (Qualitätsmanagement), unter Einbeziehung des Zentralrechners, möglich. Andererseits aber auch eine direkte Rückkopplung ohne Zeitverzug auf den Richtprozess der vorgeschalteten Rollenrichtmaschine R. Alternativ läßt sich die Meßeinrichtung M vor der Rollenrichtmaschine R zur Optimierung der Einstellung anordnen.

### Bezugszeichenliste

- 1: untere Rolle
- 2: obere Rolle
- 3: untere Rolle
- 4: obere Rolle
- 5: Arbeitsrolle
- 6: obere Rolle
- 7: untere Rolle
- 8: obere Rolle
- 9: untere Rolle

- F: Kraft
- K: Kraftbeaufschlagungsmittel
- L: ungestützte Einspannlänge
- M: Messeinrichtung
- MF: Materialfluss
- P: Langprodukt
- R: Richtmaschine
- RA: Rollenanstellmittel
- RR: Richtrolle der Richtmaschine
- S: Auslenkung
- T: Teilung
- q: Sehne
- I, II: Einspannbereich / Auflager

## Patentansprüche

1. Verfahren zur Messung der Geradheit von gewalzten, stabförmigen Langprodukten (P), wie Schienen, Träger, Stäbe oder dergleichen, mittels einer Messeinrichtung (M), deren Messwerte einem Zentralrechner zugeführt werden, wobei das die Messeinrichtung (M) durchlaufende Langprodukt (P) zwischen zwei voneinander beabstandeten, dem Langprodukt (P) Auflager (I, II) bereitstellenden Bereichen der Messeinrichtung (M) definiert eingespannt wird, wobei zwischen den Einspannbereichen ein freier Längenabschnitt ohne Abstützung des Langprodukts (P) ausgebildet ist,
**dadurch gekennzeichnet,**
**dass** das Langprodukt (P) in der zwischen den Auflagern (I, II) freien, ungestützten Einspannlänge (L) aufgrund seines Eigengewichts nach unten ausgelenkt wird, wobei mittels der Auslenkung (S) des Langproduktes (P) in der freien, ungestützten Einspannlänge (L) und einer mit ideeller Geradheit die ausgelenkte Einspannlänge überbrückenden Sehne (q) die Geradheit des Langproduktes (P) automatisch bestimmt wird.

2. Verfahren nach Anspruch 1,
**dadurch gekennzeichnet,**
**daß** die freie, ungestützte Einspannlänge (L) des Langprodukts (P) durch eine Kraft (F) beaufschlagt und mit gezielter Auslenkung elastisch verformt wird.

3. Verfahren nach Anspruch 2,
**dadurch gekennzeichnet,**
**daß** durch Messung der Auslenkung (S) und der Kraft (F) die Sehne (q) als Funktion von (S) und (F) [q= *f* (S, F] bestimmt wird.

4. Verfahren nach einem der Ansprüche 1 bis 3,
**dadurch gekennzeichnet,**
**daß** die Auslenkung (S) durch mindestens ein Lasermeßgerät ermittelt wird.

5. Verfahren nach einem der Ansprüche 1 bis 4,
**dadurch gekennzeichnet,**
**daß** zur optimierten Bestimmung der Sehne (q) und damit der Geradheit des Langproduktes (P) dessen Flächenträgheitsmoment durch Messung der Produktgeometrie einbezogen wird.

6. Verfahren nach einem der Ansprüche 1 bis 5,
**dadurch gekennzeichnet,**
**daß** zur weiteren Kompensation von Störeinflüssen auf die Genauigkeit der Geradheitsvermessung die an den Auflagern (I, II) auftretenden Kräfte berücksichtigt werden.

7. Verfahren nach einem der Ansprüche 2 bis 6,
**dadurch gekennzeichnet,**
**daß** das Eigengewicht des Langproduktes (P) bei der die Auslenkung bewirkenden Kraft (F) berücksichtigt und kompensiert wird.

8. Verfahren nach einem der Ansprüche 2 bis 7,
**dadurch gekennzeichnet,**
**daß** die elastische Verformung in verschiedenen Krümmungsebenen des Langproduktes (P) erfolgt.

9. Verfahren nach einem der Ansprüche 1 bis 8,
**dadurch gekennzeichnet,**
**daß** es hinter einer Walzstraße zu deren Einstellungsoptimierung verwendet wird.

10. Verfahren nach einem der Ansprüche 1 bis 9,
**dadurch gekennzeichnet,**
**daß** es vor und / oder hinter einer Langprodukt-Richtmaschine (R) zu deren Einstellungsoptimierung und / oder zur Kontrolle des Richtergebnisses verwendet wird.

11. Verfahren nach Anspruch 10,
**dadurch gekennzeichnet,**
**daß** bei Verwendung der Meßeinrichtung (M) mit einer Richtmaschine (R) die freie, ungestützte Einspannlänge (L) des Langprodukts (P) kleiner oder gleich der Teilung (T) von Richtrollen (RR) der Richtmaschine (R) vorgesehen wird.

## Claims

1. Method of measuring the rectilinearity of rolled, rod-shaped elongate products (P), such as rails, girders, rods or the like, by means of a measuring device (M), the measurement values of which are fed to a central computer, wherein the elongate product (P) running through the measuring device (M) is clamped in place in defined manner between two mutually spaced-apart regions, which provide supports (I, II) for the elongate product (P), of the measuring device (M), wherein a free length section without support of the elongate product (P) is formed between the clamping regions, **characterised in that** the elongate product (P) is deflected downwardly by virtue of its intrinsic weight in the free, unsupported clamping length (L) between the supports (I, II), wherein the rectilinearity of the elongate product (P) is automatically determined by means of the deflection (S) of the elongate product (P) in the free, unsupported clamping length (L) and a chord (q), with ideal rectilinearity bridging over the deflected clamping length.

2. Method according to claim 1, **characterised in that** the free, unsupported clamping length (L) of the elongate product (P) is loaded by a force (F) and resiliently deformed by a targeted amount of deflection.

3. Method according to claim 2, **characterised in that** the chord (q) is determined, by measurement of the deflection (S) and the force (F), as a function of (S) and (F) [q = *f* (S, F)].

4. Method according to any one of claims 1 to 3, **characterised in that** the deflection (S) is ascertained by at least one laser measuring instrument.

5. Method according to any one of claims 1 to 4, **characterised in that** for optimised determination of the chord (q) and thus rectilinearity of the elongate product (P) the area moment of inertia is included by measurement of the product geometry.

6. Method according to any one of claims 1 to 5, **characterised in that** the forces arising at the supports (I, II) are taken into consideration for further compensation for disturbing influences on the accuracy of the measurement of rectilinearity.

7. Method according to any one of claims 2 to 6, **characterised in that** the intrinsic weight of the elongate product (P) is taken into consideration with regard to the force (F) producing the deflection and compensation for the intrinsic weight is provided.

8. Method according to any one of claims 2 to 7, **characterised in that** the resilient deformation takes place in different planes of curvature of the elongate product (P).

9. Method according to any one of claims 1 to 8, **characterised in that** it is employed downstream of a rolling train for optimisation of the setting thereof.

10. Method according to any one of claims 1 to 9, **characterised in that** it is used upstream and/or downstream of an elongate product straightening machine (R) for optimisation of the setting thereof and/or for checking the result of the straightening.

11. Method according to claim 10, **characterised in that** in the case of use of the measuring device (M) with a straightening machine (R) the free, unsupported clamping length (L) of the elongate product (P) is provided to be smaller than or equal to the pitch (T) of straightening rollers (RR) of the straightening machine (R).

## Revendications

1. Procédé pour la mesure de la linéarité de produits longs laminés en forme de barres (P), tels que des rails, des poutrelles, des barres ou analogues, au moyen d'un mécanisme de mesure (M) dont les valeurs de mesure sont transmises à un ordinateur central, dans lequel le produit long (P) qui traverse le mécanisme de mesure (M) est serré de manière définie entre deux zones espacées l'une de l'autre du mécanisme de mesure (M), procurant des supports (I, II) au produit long (P), un tronçon libre en longueur exempt de soutien du produit long (P) étant réalisé entre les zones de serrage, **caractérisé en ce que** le produit long (P), sur la longueur libre de serrage (L) exempte de soutien entre les supports (I, II) subit une déflexion vers le bas de par son propre poids, dans lequel, au moyen de la déflexion (S) du produit long (P), sur la longueur libre de serrage (L) exempte de soutien, et d'une corde (q) présentant une linéarité idéale qui surplombe la longueur de serrage soumise à une déflexion, on détermine de manière automatique la linéarité du produit long (P).

2. Procédé selon la revendication 1, **caractérisé en ce que** la longueur libre de serrage (L) du produit long (P), exempte de soutien, est sollicitée par une force (F) et est soumise à une déformation élastique avec une déflexion ciblée.

3. Procédé selon la revendication 2, **caractérisé en ce que**, via la mesure de la déflexion (S) et de la force (F), on détermine la corde (q) en fonction de (S) et (F) [q = *f* (S, F)].

4. Procédé selon l'une quelconque des revendications 1 à 3, **caractérisé en ce que** la déflexion (S) est déterminée via au moins un appareil de mesure à laser.

5. Procédé selon l'une quelconque des revendications 1 à 4, **caractérisé en ce que**, pour la détermination optimisée de la corde (q), partant de la linéarité du produit long (P), on inclut son moment d'inertie superficielle par la mesure de la géométrie du produit.

6. Procédé selon l'une quelconque des revendications 1 à 5, **caractérisé en ce que**, à des fins de compensation ultérieure des influences perturbatrices sur la précision de la mesure de la linéarité, on prend en compte les forces qui s'exercent sur les supports (I, II).

7. Procédé selon l'une quelconque des revendications 2 à 6, **caractérisé en ce qu'**on prend en compte et on compense le propre poids du produit long (P) dans el cadre de la force (F) à l'origine de la déflexion.

8. Procédé selon l'une quelconque des revendications 2 à 7, **caractérisé en ce que** la déformation élastique a lieu dans différents plans de courbure du produit long (P).

9. Procédé selon l'une quelconque des revendications 1 à 8, **caractérisé en ce qu'**on l'utilise derrière un train de laminoir pour l'optimisation de son réglage.

10. Procédé selon l'une quelconque des revendications 1 à 9, **caractérisé en ce qu'**on utilise devant et/ou derrière une machine à dresser (R) pour produits longs pour l'optimisation de son réglage et/ou pour le contrôle du résultat du dressage.

11. Procédé selon la revendication 10, **caractérisé en ce qu'**on prévoit, lors de l'utilisation du mécanisme de mesure (M) avec une machine à dresser (R), une longueur de serrage libre (L) exempte de soutien, du produit long (P), inférieure ou égale à la répartition (T) des cylindres de dressage (RR) de la machine à dresser (R).
